# EUROPEAN PATENT SPECIFICATION

(11) **EP 3 789 155 B1**
(45) Date of publication and mention of the grant of the patent: **02.07.2025**
(21) Application number: 18925574.8
(22) Date of filing: 07.08.2018
(51) Int. Cl.: B23K 20/12, H02K 5/20

(54) **METHOD FOR SEALING AND WELDING COOLING WATER CHANNEL OF ELECTRIC MOTOR HOUSING**
VERFAHREN ZUM ABDICHTEN UND SCHWEISSEN DES KÜHLWASSERKANALS EINES ELEKTROMOTORGEHÄUSES
PROCÉDÉ POUR SCELLER ET SOUDER UN CANAL D'EAU DE REFROIDISSEMENT D'UN BOÎTIER DE MOTEUR ÉLECTRIQUE

(30) Priority: 02.07.2018 CN 201810709362
(43) Date of publication of application: 10.03.2021
(73) Proprietor: Jing-Jin Electric Technologies Co., Ltd., Beijing 100016 (CN)
(72) Inventor: YU, Ping, Beijing 100016 (CN); JIN, Haitao, Beijing 100016 (CN); LING, Xinliang, Beijing 100016 (CN); YU, Zhiming, Beijing 100016 (CN)
(74) Representative: Maiwald GmbH
(86) International application number: PCT/CN2018/099210
(87) International publication number: WO 2020/006806

(56) References cited:
- EP-A1- 3 113 340
- WO-A1-2009/142070
- WO-A1-2017/186381
- CN-A- 104 400 207
- CN-A- 105 014 231
- CN-A- 105 743 269
- CN-A- 106 181 268
- CN-U- 206 226 184
- CN-U- 206 602 437
- CN-U- 206 602 437

## Description

### TECHNICAL FIELD

The present disclosure relates to the technical field of welding, and particularly relates to a welding method for sealing a cooling-water channel of an electric-machine housing.

### BACKGROUND

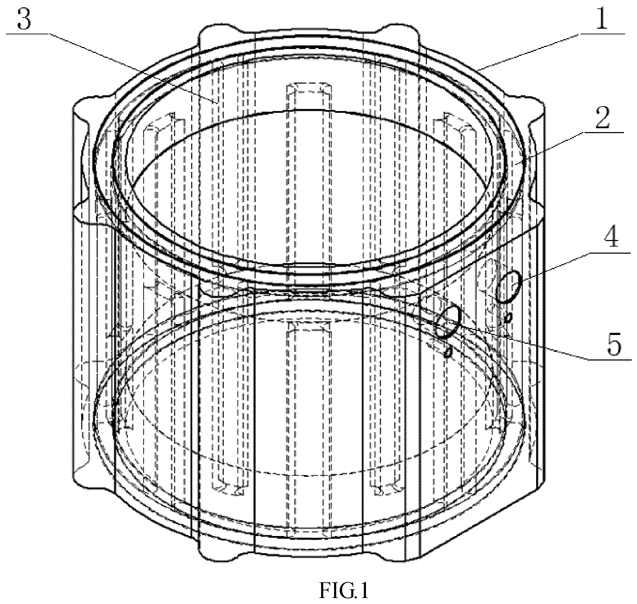

Electric machines generate a large amount of heat during its operation, and if the heat is not taken away from the electric-machines' housing, the accumulated heat will burn out the electric machines. A water-channel structure of an electric-machine housing is shown in Figs. 1-2, wherein in the water-channel structure the coolant flows in the axial direction of the electric-machine housing 1, turns back at the ends, and flows throughout the electric-machine housing 1 in an S shape (which can be determined from Fig. 1). Such a water-channel structure employs an extruded housing, in which the turning channels 32 of the water channel are made at the ends of the electric-machine housing by means of machining, and the two ends of the electric-machine housing 1 are individually welded with sealing parts 2, which can be different in sizes according to the channel design, to seal the water channel. The sealing parts 2 can be in the form of several numbers of sealing blocks 6 or a sealing end ring 7. A method using a sealing ring is disclosed in document CN 206 602 437 U.

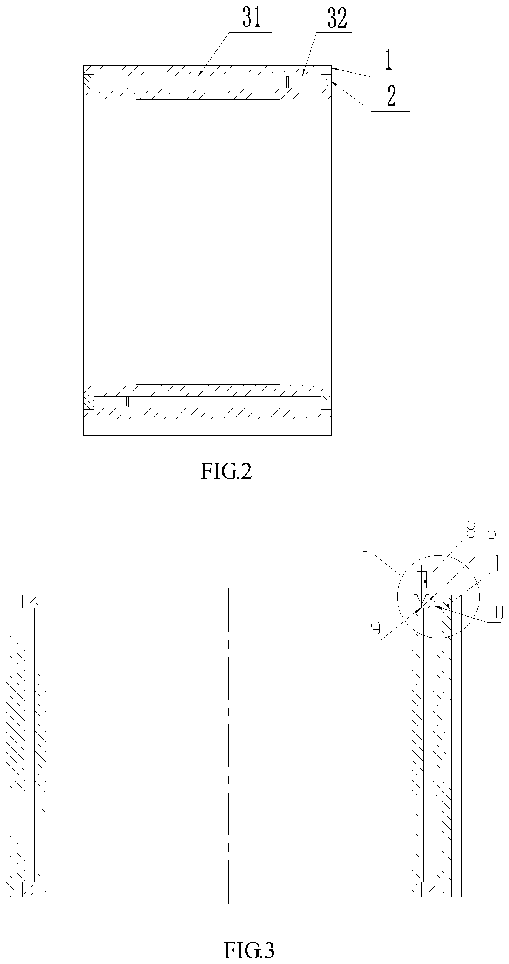

The conventional friction-stir welding is usually used to sequentially weld the welding seams on the two sides of the sealing parts 2, i.e., by using a double-welding-seam mode, welding along the grooves, the welding seam I 9, and welding seam II 10 on each sides of the sealing parts 2, as shown in Figs. 3-4. Such a welding mode has low operation efficiency, poor stability and long welding duration.

### SUMMARY

To tackle the above mentioned problems, an object of the present disclosure is to provide a welding method according to claim 1.

Preferably, a pilot for supporting the sealing parts is provided at a suitable depth to create the turning channel on the electric-machine housing.

The advantages and constructive effects of the present disclosure are as follows: The present disclosure utilizes the stirring head having a larger diameter to sufficiently stir-weld each of the sealing parts and the electric-machine housing all at once, i.e., welding in the single-welding-seam mode, so that the welding can be completed at one time, which, as compared with the conventional mode of double-welding-seam mode, has a higher operation efficiency, a better stability, and reduces welding duration by 1/2 to 1/3.

### BRIEF DESCRIPTION OF THE DRAWINGS

Fig. 1 is a structural schematic diagram of the water-channel structure of an electric-machine housing;
Fig. 2 is a sectional view of the electric-machine housing;
Fig. 3 is a schematic diagram of the welding mode of a conventional water-channel structure, the double-weld-seam mode;
Fig. 4 is an enlarged view of the point I in Fig. 3;
Fig. 5 is a schematic diagram of the seal-welding mode of the cooling-water channel of the electric-machine housing according to the present disclosure, the single-welding-seam mode;
Fig. 6 is an enlarged view of the point II in Fig. 5;
Fig. 7 is a structural schematic diagram of the sealing by using a ring at an end of the
electric-machine housing according to the present disclosure; and

Fig. 8 is a structural schematic diagram of the sealing by using blocks at an end of the electric-machine housing according to the present disclosure.
in the drawings: 1 is the electric-machine housing, 2 is the sealing part, 3 is the cooling-water channel, 31 is the axial water channel, 32 is the turning channel, 4 is the water inlet, 5 is the water outlet, 6 is an example of the sealing end blocks, 7 is an example of the sealing end ring, 8 is the friction-stir-welding stirring head, 9 is the welding seam I, and 10 is the welding seam II.

### DETAILED DESCRIPTION

In the water-channel structures of electric-machine housings the coolant flows in the axial direction, turns a U-turn at the ends, and flows throughout the electric-machine housing in an S shape. Sealing parts are welded to the two ends of the electric-machine housings to seal the water channels. The conventional welding mode is to sequentially weld the welding seams on both sides of the sealing parts, with a double-welding-seam mode. Such a welding mode has low operating efficiency, poor stability and long welding duration.

To tackle the problems of the conventional double-welding-seam mode which has low operating efficiency, poor stability and long welding duration, the present disclosure employs friction-stir welding, which can also be used to weld the sealing parts and seal the water channels. The present disclosure utilizes a larger stirring head to sufficiently stir-weld the sealing parts and the electric-machine housing all at once, i.e., welding with a single-welding-seam mode, so that the welding can be completed one time, and when compared with the conventional double-welding-seam mode (welding along the contour of the sealing end ring), has a higher efficiency, better stability, and reduced welding by 1/2 to 1/3.

In order to achieve the objectives, and present the technical solutions and the advantages of the present disclosure clearer, the present disclosure will be described below in detail in conjunction with the drawings and the particular embodiments.

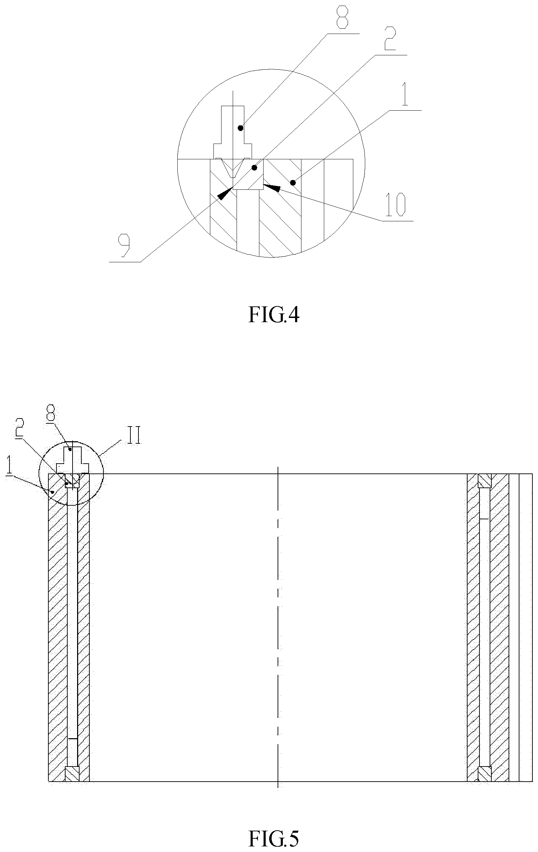

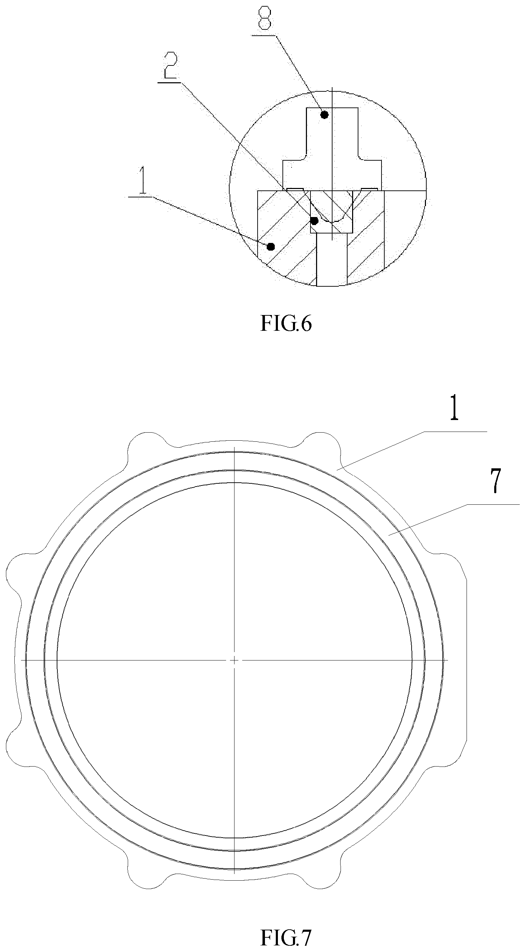

Figs. 5-6 show a welding method for sealing a cooling-water channel of an electric-machine housing, wherein the method comprises the steps of:
1) seal the opened ends of the cooling-water channel using the sealing parts 2 to form an S-shaped sealed cooling water channel inside the electric-machine housing 1; and
2) weld each of the sealing parts 2 and the electric-machine-housing 1 together by using the friction-stir-welding head 8, in one single and complete single-welding-seam mode.

In the step 1), sealing-part slots at the ends of the electric-machine housing 1 in a circumferential direction, wherein the sealing-part slots are located outside the turning channels 32, and the sealing parts 2 are placed inside the sealing-part slots.

Optionally, pilots for supporting the sealing parts 2 are provided at a suitable depth to create the turning channel 32 on the electric-machine housing 1 in order to limit the positions and support the sealing parts 2 during welding operation, thereby satisfying the requirements on the welding process.

In accordance with the invention, sealing-part slots on the electric-machine housing can be machined out to place the sealing parts 2. The sealing parts 2 that are placed inside mentioned sealing-part slots are called sealing end rings 7, and the sealing end rings 7 are welded with the electric-machine housing 1 to create the turning channels 32 which seals and completes the S-shaped cooling-water channel inside the electric-machine housing 1. The friction-stir-welding stirring head 8 sufficiently stir-welds the sealing end rings 7 and the electric-machine-housing together in a single-welding-seam mode, which guarantees the sealing of the cooling-water channel and prevents the leakage of the coolant flowing inside the cooling-water channel.

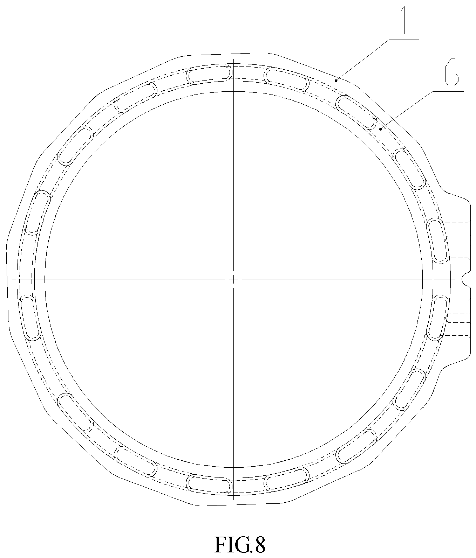

In accordance with the invention, multiple sealing slots, where each sealing slot is an independent slot of any shape, are located circumferentially on one or multiple layers on the electric-maching housing ends that corresponds to the shape and number of layers of water-cooling channels' design respectively, and the sealing part 2 that is placed inside these mentioned sealing slots are called sealing end blocks 6, whereby the different welding shapes can be better applied in housings of different cross-sectional shapes, as shown in Fig. 8. By using a number of sealing end blocks 6 to seal the turning channels 32, the cooling-water channel forms a complete S-shaped sealed channel. The friction-stir-welding stirring head 8 sufficiently stir-welds each sealing end blocks 6 and the electric-machine-housing 1 together, in a single-welding-seam mode, which guarantees the sealing of the cooling-water channel and prevents the leakage of the coolant flowing inside the cooling-water channel.

Two holes are made at the outer surface of the electric-machine housing 1, and are in communication with the inlet and the outlet of the cooling-water channel respectively, to form a water inlet 4 and a water outlet 5, to enable the coolant to be circulated, and cool the electric-machine housing.

The purpose of welding the sealing end rings or the sealing end blocks to the two ends of the electric-machine housing in the present disclosure is to seal the opened turning channels at the ends of the cooling-water channel, to form a complete S-shaped water channel, to prevent the leakage of the coolant.

The present disclosure utilizes the stirring head having a larger diameter to sufficiently stir-weld each of the sealing parts and the electric-machine housing all at once, i.e., welding in the single-welding-seam mode, so that the welding can be completed at one time, which, as compared with the conventional mode of double-welding-seam mode, has a higher operation efficiency, a better stability, and reduces welding duration by 1/2 to 1/3.

The above are merely embodiments of the present disclosure, and are not limiting the protection scope of the present disclosure. Any modifications, equivalent substitutions, improvements and extensions that are made within the scope of the claims.

## Claims

1. A welding method for sealing a cooling-water channel (3) of an electric-machine housing (1), **characterized by** the steps of:
a) sealing the opened ends of the cooling-water channel (3) using sealing parts (2) to form an S-shaped sealed cooling water channel inside the electric-machine housing (1), wherein the sealing parts (2) are placed inside sealing-part slots, the sealing-part slots being located outside the turning channels (32) at the ends of the electric-machine housing (1) in a circumferential direction, and wherein each sealing slot is an independent slot of any shape, that corresponds to the shape, and number of water-cooling channels' design respectively, and
b) welding each of the sealing parts (2) and the electric-machine-housing together by friction-stir-welding, in one single and complete single-welding-seam mode, so that the sealing parts (2) placed inside the sealing slots form sealing end blocks (6) that seals the turning channels (32) to form the complete S-shaped cooling water sealed channel.

2. The welding method according to claim 1, **characterized in that**: a support surface for supporting the sealing parts (2) is provided at a suitable depth to create the turning channel (32) on the electric-machine housing (1).

## Patentansprüche

1. Ein Schweißverfahren zum Abdichten eines Kühlwasserkanals (3) eines Elektromaschinengehäuses (1), **gekennzeichnet durch** die Schritte:
a) Abdichten der geöffneten Enden des Kühlwasserkanals (3) unter Verwendung von Dichtungsteilen (2), um einen S-förmigen abgedichteten Kühlwasserkanal innerhalb des Elektromaschinengehäuses (1) zu bilden, wobei die Dichtungsteile (2) innerhalb von Dichtungsteilaussparungen angeordnet sind, die Dichtungsteilaussparungen außerhalb der Wendekanäle (32) an den Enden des Elektromaschinengehäuses (1) in einer Umfangsrichtung angeordnet sind, und wobei jede Dichtungsaussparung eine unabhängige Aussparung von beliebiger Form ist, die der Form beziehungsweise der Anzahl des Designs der Wasserkühlungskanäle entspricht, und
b) Verschweißen jedes der Dichtungsteile (2) und des Elektromaschinengehäuses durch Reibrührschweißen in einem einzigen und vollständigen Einzelschweißnahtmodus, so dass die in den Dichtungsaussparungen angeordneten Dichtungsteile (2) Dichtungsendblöcke (6) bilden, die die Wendekanäle (32) abdichten, um den vollständigen S-förmigen abgedichteten Kühlwasserkanal zu bilden.

2. Das Schweißverfahren nach Anspruch 1, **dadurch gekennzeichnet, dass** eine Stützfläche zum Abstützen der Dichtungsteile (2) in einer geeigneten Tiefe vorgesehen ist, um den Wendekanal (32) an dem Elektromaschinengehäuse (1) zu erzeugen.

## Revendications

1. Procédé de soudage destiné à sceller un canal d'eau de refroidissement (3) d'un boîtier de machine électrique (1), **caractérisé par** les étapes consistant à :
a) sceller les extrémités ouvertes du canal d'eau de refroidissement (3) au moyen de pièces d'étanchéité (2) pour former un canal d'eau de refroidissement scellé en forme de S à l'intérieur du boîtier de machine électrique (1), les pièces d'étanchéité (2) étant placées à l'intérieur de fentes pour pièce d'étanchéité, les fentes pour pièce d'étanchéité étant situées à l'extérieur des canaux de changement de direction (32) aux extrémités du boîtier de machine électrique (1) dans une direction circonférentielle, et chaque fente d'étanchéité étant une fente indépendante de forme quelconque qui correspond respectivement à la forme et au nombre prévus par la conception des canaux de refroidissement à eau, et
b) souder chacune des pièces d'étanchéité (2) et le boîtier de machine électrique ensemble par soudage par friction malaxage, dans un mode unique et complet de soudage en un seul cordon, de telle sorte que les pièces d'étanchéité (2) placées à l'intérieur des fentes pour pièce d'étanchéité forment des blocs terminaux d'étanchéité (6) qui scellent les canaux de changement de direction (32) pour former le canal d'eau de refroidissement scellé en forme de S complet.

2. Procédé de soudage selon la revendication 1, **caractérisé en ce que** : une surface de support destinée à supporter les pièces d'étanchéité (2) est prévue à une profondeur appropriée pour créer le canal de changement de direction (32) sur le boîtier de machine électrique (1).
